# EUROPEAN PATENT SPECIFICATION

(11) **EP 3 885 770 B1**
(45) Date of publication and mention of the grant of the patent: **22.01.2025**
(21) Application number: 21020160.4
(22) Date of filing: 22.03.2021
(51) Int. Cl.: G01N 35/00, G01N 35/10, G01N 35/04

(54) **LABORATORY AUTOMATION DEVICE**
LABORAUTOMATISIERUNGSVORRICHTUNG
DISPOSITIF D'AUTOMATISATION DE LABORATOIRE

(30) Priority: 23.03.2020 US 202062993393 P
(43) Date of publication of application: 29.09.2021
(73) Proprietor: EFEVRE TECH LTD, 6056 Larnaca (CY)
(72) Inventor: Kyriacou, Dimitris, 6056 Larnaca (CY); Inglezakis, Antonios, 2107 Aglantzia, Nicosia (CY); Odysseos, Constantinos, 2330 Lakatamia, Nicosia (CY)
(74) Representative: Pintz, György

(56) References cited:
- US-A1- 2014 030 802
- US-A1- 2014 296 089

## Description

### TECHNICAL FIELD

The disclosure relates to a laboratory automation device and to a method for its application.

### BACKGROUND

Most life science laboratory work is currently performed manually; using equipment that require full attention. Thus, research progress is slow, tedious, vulnerable to human errors and prone to significant experimental inconsistencies. Despite the rising demand, only limited automation has been developed so far for life science research.

The majority of known automation platforms serve only for semi-automation of laboratory protocols. Full automation of life-science laboratory procedures can be offered by large and expensive robotic installations; many of these are specialized and designed according to the needs of a particular laboratory. A small number of known systems do allow the full automation of some routine procedures, but only by using their reagent/bio-columns and consumable kits without the possibility of modifications required by the users.

Many devices in the field using robotic arms, such as the system described in patent application No. US2003225477A1, are not laboratory devices but only adjustable labware transferring systems that transfer labware to other devices at different positions. These devices do not include laboratory equipment such as liquid handlers or centrifuge which can be used for automation of life-science laboratory procedures. The current life-science automation systems provide some walk-away functionality by having stackers or towers where microtiter plates and other labware can be stored for a short period in room temperature, however none of these systems can offer 24-hour unmonitored execution of more than one laboratory procedure.

Patent application No. US 2014/296089 A1 describes systems and methods for sample collection, sample preparation, assay, and/or detection. The disclosed device might include a cooling unit or a shared module being a small refrigeration. However, the application does not disclose any information about the cooling unit or the small refrigeration.

### SUMMARY

It is an object to provide an improved laboratory automation device and a method for its application. The foregoing and other objects are achieved by the features of the independent claims. Further implementation forms are apparent from the dependent claims, the description, and the figures.

According to a first aspect, there is provided a laboratory automation device comprising a housing having a frame and at least two shelves, a centrifuge with at least two labware holding positions, the shelves holding a labware transferring system, the labware transferring system comprising a four-axis robotic arm and linear actuators configured to move and transfer labware within the device, the linear actuators comprising a loading unit and an automatic drawer unit for exporting and importing the labware; a freezer and a fridge configured to be loaded and unloaded by the loading unit; at least one three-axis liquid handling station, the liquid handling station comprising at least two pipettes, at least nine positions for labware, at least one waste collection unit, at least one tip box and at least one tip feeder configured to automatically refill said tip box. The laboratory device further comprises a microplate sealer, a temperature module, an incubation module, a magnetic module, an automated thermocycler, a monitoring system comprising sensors and/or cameras configured to monitor the movement of the labware transferring system. The laboratory device further comprises a controlling and scheduling system having a user interface designed to be remotely operated by a user to control the device and/or schedule procedures on the device, the controlling and scheduling system being connected to the monitoring system. The centrifuge, the freezer, the fridge, the liquid handling stations, the microplate sealer, the incubation module, the magnetic module, the temperature module and the automated thermocycler are connected via the labware transferring system.

The laboratory device further comprises an ice producing unit, the ice producing unit comprising an automated ice-bucket.

This solution provides a compact, autonomous and versatile device that allows walkaway automation for more than one laboratory procedure in 24 hours without human intervention. The microplate sealer allows storage of samples/consumables in sealed containers for a period of 24 hours or longer. The waste collection unit which can be connected to an external sewage system allows storage of waste for 24 hours or longer, but also allows the constant removal of waste. The tip feeder facilitates the non-stop refill of pipetting consumables for 24 hours or more, providing a steady supply. The fridge also facilitates autonomy, because any labware containing samples and/or reagents stable at 2-8°C can be stored in the fridge for 24 hours or more and automatically retrieved any time needed. The freezer also facilitates autonomy, because any labware containing samples and/or reagents stable at -20°C can be stored in the freezer for 24 hours or more and automatically retrieved any time needed. The labware transferring system facilitates autonomy and versatility, because any labware can be automatically transferred to any incorporated parts without human intervention. Versatility is achieved since the centrifuge, the freezer, the fridge, the liquid handling stations, the microplate sealer, the incubation module, the magnetic module, the temperature module and the automated thermocycler are all physically connected via the labware transferring system. The housing is able to protect the user from the moving parts. The housing preferably encloses the centrifuge, the freezer, the fridge, the liquid handling stations, the microplate sealer, the incubation module, the magnetic module, the temperature module and the automated thermocycler. The device according to the first aspect can be programmed for 24/7 by the user and the device is able to execute different laboratory procedures autonomously. It is also possible to execute more laboratory procedures at the same time or after each other, without needing any intervention of the user. The controlling and scheduling system with the user interface facilitate cancelling or changing any step of the procedure 24/7, remotely due to the monitoring system comprising sensors and/or cameras, without compromising the preservation of the consumables of the cancelled procedure due to fridge and freezer. The controlling and scheduling system also facilitates synchronization of robotic movements and allows initiation of any procedure at a different time point than the point of registration of procedure by the user into the system. The monitoring system comprising sensors and/or cameras allows monitoring of all robotic movements and produce analogue and digital information which is used by the controlling and scheduling system for autonomous self-correction, error monitoring and collision avoidance. The device according to the first aspect also allows the user to stay away, as the user does not need to be present when the laboratory process starts or finishes, since the device can store the treated samples, microplates, etc. for long time, i.e. 24 hours or more. The user staying away does not compromise the sample/reagent condition and integrity.

In a possible implementation form of the first aspect, the linear actuators comprise an elevator, an upper-deck slider and a lower-deck slider. The elevator has a vacuum gripper; the robotic arm also has a vacuum gripper; the device comprises an air pump system comprising air pumps for controlling said vacuum grippers; the upper-deck slider and the lower-deck slider are two-axis linear actuators. The upper-deck slider is configured to load and unload labware from the robotic arm and/or the elevator, the upper-deck slider having a camera attached to it. The lower-deck slider is configured to load and unload labware from the loading unit and/or the elevator. This facilitates the automatic transferring of any labware within the device between all essential parts of the device. Any reagent or sample needed during a laboratory process can be retrieved on demand and moved with the sliders to the location quickly, automatically, and autonomously.

In a further possible implementation form of the first aspect, the monitoring system comprises at least six cameras; at least one camera being mounted on the liquid handling station. This facilitates the monitoring and recording of the steps executed within the device and allows collision avoidance and error tracking. The cameras can record everything that happens in the device so that the user may monitor the process remotely and even watch the process multiple times.

In a further possible implementation form of the first aspect, any of the freezer and the fridge may enclose multiple shelves and any of them (the freezer, the fridge or both) may enclose an additional positioning unit. The positioning unit is configured to place labware at a predetermined position inside the freezer and/or the fridge and/or to move, e.g. rotate said shelves inside the freezer and the fridge. The shelves may move in a carousel-like movement. This facilitates storing any labware for a long period of time (24 hours or longer), rearranging them any time necessary (according to temperature requirements, usage by different users etc.), and retrieving them automatically any time.

In a further possible implementation form of the first aspect, the device comprises a barcode scanner connected to the automatic drawer unit for reading barcodes on labware. This facilitates reading barcodes on the imported labware and thus facilitates an autonomous device that is able to automatically recognize the loaded labware.

In a further possible implementation form of the first aspect, the device comprises at least three shelves arranged above each other in the device; and the freezer, the fridge, the liquid handling station, the microplate sealer, the incubation module, the temperature module, the magnetic module, and the automated thermocycler are mounted at predetermined positions, preferably on the shelves; and the centrifuge has a metallic base. This facilitates the device being a compact device having a vertical arrangement, which allows smaller footprint.

In a further possible implementation form of the first aspect, ice producing unit is usually attached to the freezer. The automated ice-bucket can automatically fill the ice producing unit with crushed ice or iced-water. Thus, this implementation facilitates an autonomous device with automated production of ice.

In a further possible implementation form of the first aspect, the volume of the device is less than 3.5 m³, preferably less than 3 m³. This facilitates a relatively small, compact device that can be used at different locations, even at locations with less available free space. Furthermore, this also facilitates the device being movable.

According to a second aspect, there is provided a method for the application of an automated laboratory device according to the first aspect for performing a laboratory process, wherein the method comprises the steps:
- importing at least one labware containing a sample and at least one labware containing a reagent via the automatic drawer unit into the device;
- identifying the labware containing the sample and the labware containing the reagent and selecting a corresponding laboratory process via the controlling and scheduling system;
- optionally, storing the labware containing the sample and/or the labware containing the reagent in the freezer or the fridge for later use;
- transferring the labware containing the sample and the labware containing the reagent via the labware transferring system to the liquid handling station;
- transferring reagent in a liquid volume of 1-5000 µL from the labware containing the reagent to at least one labware containing the sample, and
- treating the sample by mixing the reagent with the sample in any volume between 1-2000 µL with the pipettes in the liquid handling station.

This solution provides a method that is able to execute different laboratory processes even at the same time without any human intervention. The method allows the complete stay-away of the user for 24 hours or longer. The performed laboratory process(es) can be composed of any combination of different series of liquid transferring/mixing steps with different volume within any labware, via pipetting and/or pump suction. Any combinations of procedures done by the mainstream equipment found in any research laboratory worldwide can be executed in this device as well. The identification step of the loaded labware can be done via a barcode scanner, via the user's registration number in the device through the user interface, and/or via the controlling and scheduling system. The identification step can be done at the same time with the loading, or before or after. The controlling and scheduling system facilitates the automatic execution of the laboratory process required by the user.

In a possible implementation form of the second aspect, the labware containing the sample is identified with a barcode scanner connected to the automatic drawer unit. This facilitates a quicker and more comfortable process for the user, since the barcode scanner can automatically recognize the loaded labware and can even start the corresponding process automatically.

In a further possible implementation form of the second aspect, the method further comprises the step of incubating the treated sample to a predetermined temperature and/or shaking the treated sample for up to 3000 rpm for more than 1 second with the incubation module, and the laboratory process may be paused after any step for a period longer than 1 second for said heating or shaking of the sample with the incubation module. (Rpm means rotations per minute.) This facilitates heating and rotational movement of the sample(s) inside the mounted labware, which are necessary steps in some laboratory procedures.

In a further possible implementation form of the second aspect, the method further comprises the steps:
- transferring the labware containing the treated sample to the temperature module and cooling the treated sample to a temperature below room temperature (room temperature meaning 25 °C) to about 4°C with the temperature module;
- transferring the labware containing the treated sample to the centrifuge via the labware transferring system;
- centrifuging the labware containing the treated sample for a period longer than 1 second for 100-15000 rpm with the centrifuge;
- adding magnetic beads to the treated sample via the liquid handling station, transferring the labware containing the treated sample to the magnetic module via the labware transferring system and purifying extracted biomolecules by activating the magnetic beads and then removing supernatant from the treated sample by liquid handling;
- mixing the extracted biomolecules with Polymerase Chain Reaction (PCR) reagents;
- transferring the labware containing the PCR mixture to the automated thermocycler to perform the PCR reaction; and
- exporting the labware containing the PCR reaction mixture via the automatic drawer unit to the user.

This allows performing several more laboratory procedures that include these steps. The temperature module facilitates the heating and cooling of samples within the labware.

In a further possible implementation form of the second aspect, the used labware and reagents are transferred to the waste collection unit via the linear actuators. This facilitates allows the constant removal of waste and thus an autonomous method that does not need human intervention for more than 24 hours.

In a further possible implementation form of the second aspect, the steps are monitored and recorded by the cameras within the device. This facilitates monitoring of all robotic movements and producing analogue and digital information to be used for autonomous self-corrections, error monitoring and collision avoidance by the controlling and scheduling system.

In a further possible implementation form of the second aspect, any of the steps are executed repeatedly without human supervision for a time period of 24 hours or longer; and the user is informed via the user interface by the controlling and scheduling system when the laboratory process is completed, and of any errors that occurred during the process. This facilitates the flexible and versatile use, controlling and scheduling of the device that can all be done remotely.

This and other aspects will be apparent from the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:

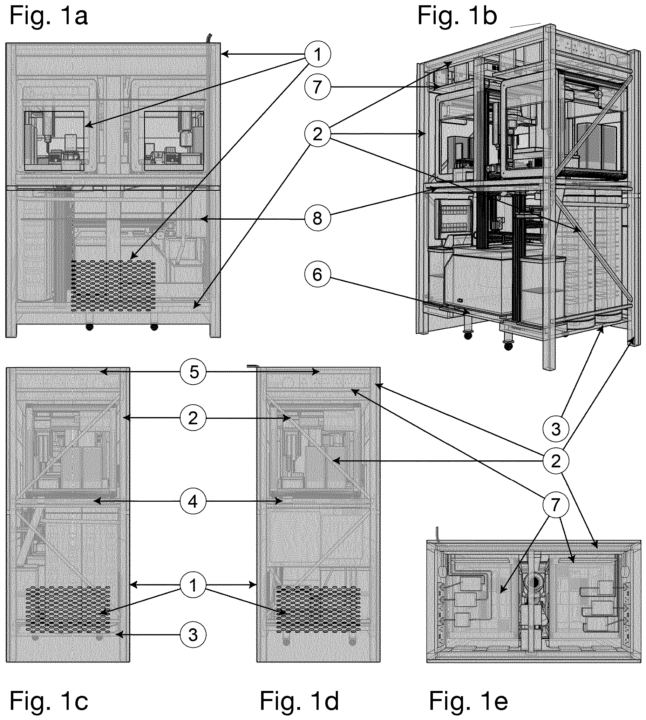

Figs. 1a-1e show different views of a laboratory automation device in accordance with one embodiment of the present invention, having covering panels. Fig. 1a shows a backside view, Fig. 1b shows an axonometric view, Fig. 1c illustrates a right-side view, Fig. 1d illustrates a left side view and Fig. 1e illustrates a top view of the device.

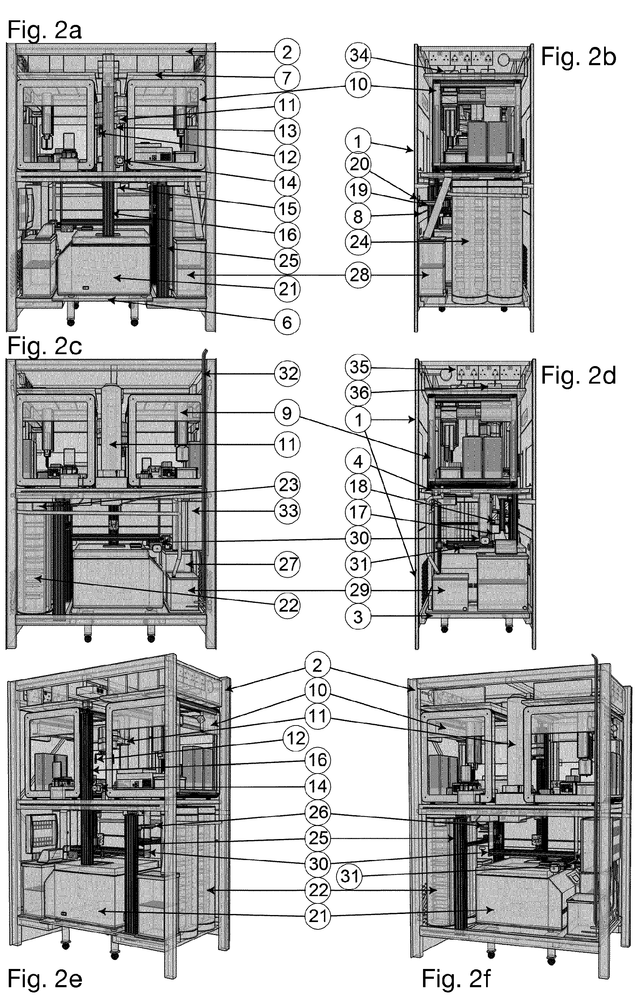

Fig. 2a-2f show different views of a laboratory automation device in accordance with one embodiment of the present invention, without any covering panels. Fig. 2a shows a front view, Fig. 2b shows a right-side view, Fig. 2c illustrates a backside view, Fig. 2d illustrates a left side view, and Fig. 2e and 2f illustrate axonometric views of the device.

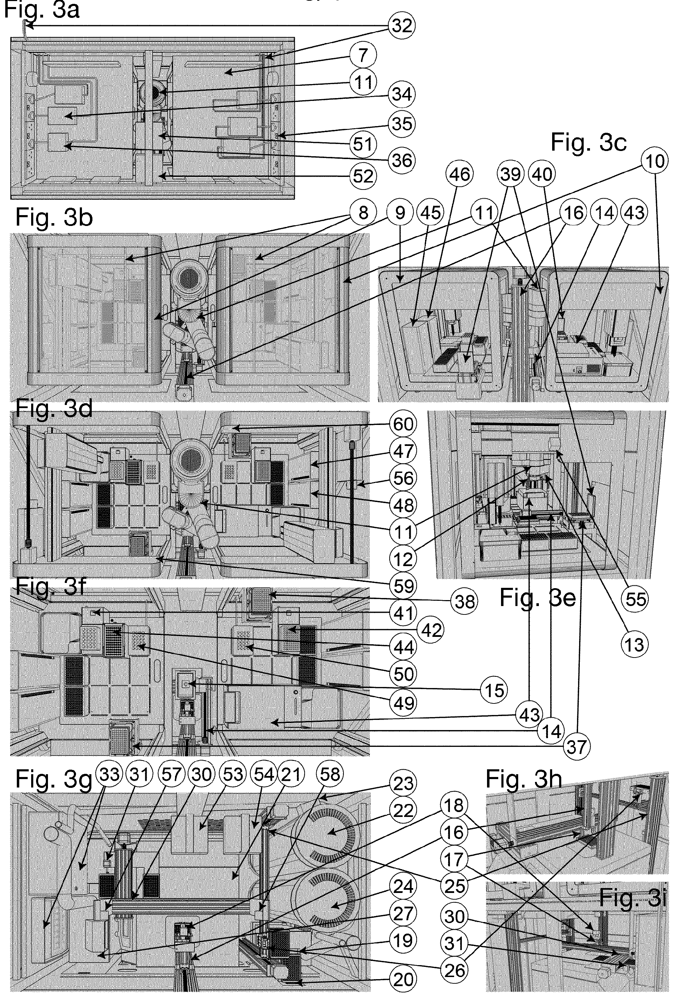

Fig. 3a-3i show different details and views of a laboratory automation device in accordance with one embodiment of the present invention. Fig. 3a, 3b, 3d, 3f and 3g show a top view of a detail of the device, Fig. 3c and 3e show a side view of a detail of the device, Fig. 3h and 3i illustrate axonometric views of a detail of the device.

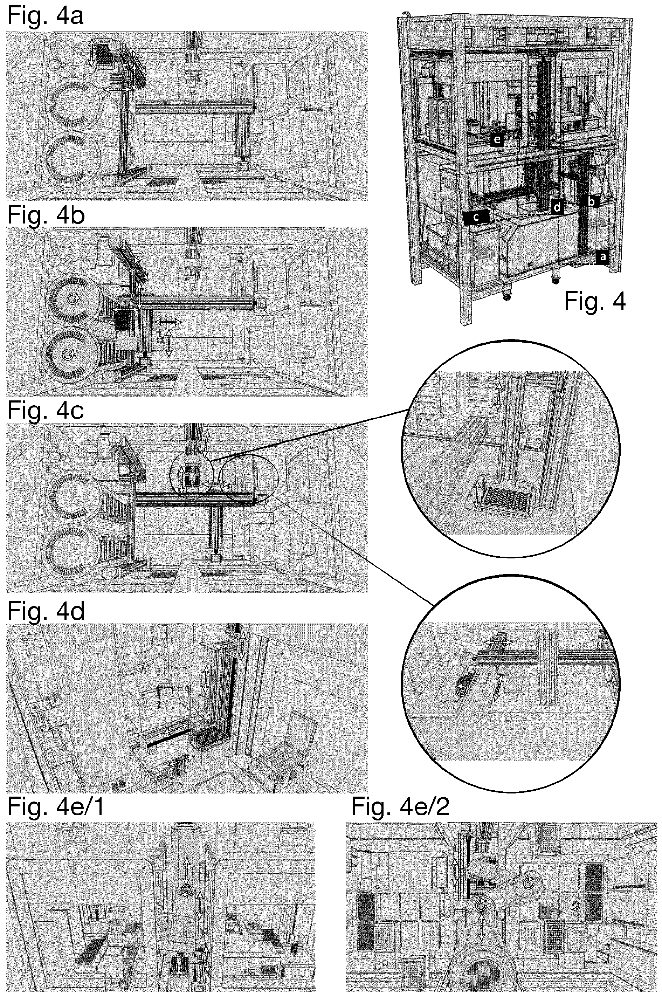

Fig. 4 shows an axonometric view of a laboratory automation device in accordance with one embodiment of the present invention, without any covering panels. Certain segments of the device (details a-e) are enlarged in Figs. 4a-4e to show them and their moving parts in more detail.

### DETAILED DESCRIPTION

A preferred embodiment of the laboratory automation device that is illustrated in Figs. 1a-1e and Figs. 2a-f comprises a housing having a frame 2 and at least three shelves 3, 4, 5 that hold the laboratory equipment of the device. In other embodiments other shelves can be included. The device may include a lower deck and an upper deck. In Figs. 1a-1e and Figs. 2a-f shelf 3 is for the lower deck, shelf 4 is for the upper deck and shelf 7 is for the controlling and scheduling system and other units such as the power supply 34 and computer 36. Shelf 5 is the roof in this embodiment. However, other arrangement is also possible, for example an embodiment where shelf 5 holds the controlling and scheduling system and other electronic and mechanical units; in this case, shelf 7 is not necessary. The shelves 3, 4, 5, 7 are preferably metallic shelves and have 600 kg weight limit per shelf; the frame 2 is also metallic and it comprises horizontal, vertical and in-angle beams. The frame 2 holds the shelves 3, 4, 5, 7 and all components mounted on the frame 2 or placed on the shelves 3, 4, 7. The frame 2 may also hold covering panels 1 that are preferably metallic and may comprise windows and doors. In this case, the panels 1 are also part of the housing, but are optional. Figs. 1a, 1c and 1d illustrate such panels. The housing preferably encloses all important laboratory equipment such as a centrifuge 21, a freezer 22, a fridge 24, the liquid handling station(s) 9, 10, a microplate sealer 39, 40, an incubation module 37, 38 (incubation module meaning heating and shaking module), a magnetic module 44, a temperature module (41, 42), tip feeders (47, 48) and an automated thermocycler 43. The housing protects the user from the moving parts and allows the device being compact and minimizes contaminations. The housing may include led light strips 8 that can be attached to the shelves 3, 4, 5, 7 for example. Preferably, the freezer 22, the fridge 24, the liquid handling station(s) 9, 10, the microplate sealer(s) 39, 40, the incubation module(s) 37, 38, the temperature module(s) 41, 42, the magnetic module 44, and the automated thermocycler 43 are mounted at predetermined positions on the shelves 3, 4, 5, 7.

The volume of the device is less than 3.5 m³, preferably less than 3 m³, more preferably in the range of 2.4-2.99 m³. In a possible embodiment, it has the following size: height about 2000 mm, width: about 1400-1600 mm (1454 mm in an embodiment), depth: 800-900 mm (834 mm in an embodiment). In a preferred embodiment just like in Figs. 1a-1e and Figs. 2a-2f and Fig. 4, the device has vertical arrangement. This means that the three shelves 3, 4, 7 are arranged above each other in the device so that the device only requires a small floor area. Preferably, the device is free standing and its weight is maximum 1000-1200 kg.

The laboratory automation device also comprises a robotic centrifuge 21 that has at least two labware holding positions, and the centrifuge 21 preferably has a separate metallic base 6. This metallic base 6 can have heavy duty wheels. The centrifuge 21 is a universal table top or freestanding centrifuge, which is preferably refrigerated, is preferably able to precool the rotors during standstill, has a maintenance-free induction drive motor, two motorized lid locks, a stainless-steel bowl, an imbalance switch, a speed range up to 15.000 rpm, a maximum capacity of 4 x 800 ml down to microtubes with different adapters in the same bucket and a microcontroller controlling speed, gravitational field and time. Preferably, the centrifuge 21 also has a Spincontrol Universal with RS 232 as control unit, has various angle and swing-out rotors available, the rotors being lockable in 4 or 6 position and each rotor position identifiable.

In Figs. 2a-ef we can see the shelves 3, 4, 7 holding the different laboratory equipment in different views. The different laboratory equipment can however be arranged differently as well. The shelves 3, 4, 7 are also holding a labware transferring system that comprises a four-axis robotic arm 11 and linear actuators 14, 16, 19, 25, 30, 31 configured to move and transfer labware within the device. Most of the linear actuators 14, 16, 19, 25, 30, 31 are preferably two-axis actuators. The linear actuators comprise a loading unit 25 for loading and unloading the freezer 22 and the fridge 24. The centrifuge 21, the freezer 22, the fridge 24, the liquid handling station(s) 9, 10, the microplate sealer(s) 39, 40, the incubation module(s) 37, 38, the magnetic module 44 and the automated thermocycler 43 are all physically connected via the labware transferring system.

The freezer 22 typically has a target temperature of -20°C, a spark free safety interior, insulation, automated defrost, automated door opening, closing and lock, high/low temperature alarm. The fridge 24 typically has a target temperature of 2-8°C a spark free safety interior, insulation, automated defrost, automated door opening, closing and lock, high/low temperature alarm. In a possible embodiment, either the fridge 24 or the freezer 22 or both can have up to 48 shelves: 12-14 cm width, 8-10 cm depth and 3-5 cm height each, that are fan circulated. The shelves can rotate in one embodiment, which is a movement, more particularly a carousel-like movement. In a possible embodiment, either the fridge 24 or the freezer 22 or both may enclose an additional positioning unit. This positioning unit can place labware containing sample(s) or reagent(s) at a predetermined position inside the freezer 22 and/or the fridge 24. The positioning unit may be able to also move, for example rotate the shelves inside the freezer 22 and/or the fridge 24, which rotation may be a carousel-like movement. In another possible embodiment, the shelves can rotate on the vertical axis and the loading unit 25 can rearrange any labware inside the freezer 22 and/or the fridge 24 to provide optimum temperature for all labware and to retrieve any labware any time.

The loading unit 25 is preferably a two-axis linear actuator for tube racks, microplates and other labware, it is capable of loading and unloading labware from the automated fridge 24 and freezer 22, loading and unloading labware from the automatic drawer unit 19 and loading and unloading labware from lower-deck slider 30. The loading unit 25 can comprise a vacuum gripper 26 and an air pump 54 for controlling the vacuum gripper 26. The vacuum gripper 26 may comprise aluminum custom-made fingers.

The device comprises an ice producing unit 23, which comprises an automated ice-bucket 50. The automated ice-bucket 50 can store and produce ice and automatically fill the ice producing unit with crushed ice or iced-water any time when necessary. The ice producing unit 23 is preferably connected and attached to the freezer 22.

The linear actuators also comprise an automatic drawer unit 19 for exporting out of the device and importing the labware into the device. The automatic drawer unit 19 may comprise a barcode scanner 20 for reading barcodes on labware. The automatic drawer unit 19 is a custom-made shelve that is capable of linear movements inside and outside the device, is able to import labware containing sample or reagent into the device by the users and export labware outside of the device to be picked up by users. The automatic drawer unit 19 is preferably on the lower deck.

The four-axis robotic arm 11 can have a minimum reach of 400 mm from its core, can comprise a camera 13 for calibrations, have a payload of up to 1.5 kg, and a maximum magnitude: rear arm limitations -90°- 90°, forearm limitations -140°-140°.

Its other preferred features are as follows:
Z-axis screw limitations 0 mm - 250 mm
End-effector rotation unlimited -360°- 360°
Maximum speed: Joint speed of Forearm and Rear Arm 180°/s
Resultant speed of the Forearm and Rear Arm 2000 mm/s
Speed of Z-axis 1000 mm/s
Repeatability: 0.02 mm
Communication interface: Ethernet, RS-232C

The laboratory automation device also comprises at least one three-axis liquid handling station 9, 10. The preferred embodiment of the laboratory automation device that is illustrated in Figs. 1a-1e and Figs. 2a-ef comprises two liquid handling stations 9, 10. However, the device can also comprise more than two liquid handling stations, for example three or four. The liquid handling station(s) 9, 10 typically comprise at least two pipettes, the pipettes being 1-1000 µL pipettes with 1 or 8 channels. The liquid handling station(s) 9, 10 comprise at least nine positions for labware, two positions for tip boxes and at least one waste collection unit 27, 28. The waste collection unit(s) 27, 28 is collecting used labware and/or solvents and is receiving trash via suction tubes from the disposal areas of the liquid handling station(s) 9, 10. In the illustrated embodiment each liquid handling stations 9, 10 has a waste collection unit(s) 27, 28. They can receive for example used plasticware with or without liquid and inorganic liquids and can separate solids from liquid through a mesh. Liquids are drained both manually and automatically depending on the user requirements. The device may further include a trash bin 29 for organic solvents in which liquids can be drained both manually and automatically depending on the user requirements. The liquid handling station(s) 9, 10 further comprises at least one tip box and at least one tip feeder 45, 46, 47, 48 for automatically refilling the tip box. In the preferred embodiment where there are two liquid handling stations 9, 10, each of them comprises at least two tip boxes and two tip feeders. The liquid handling station(s) 9, 10 may also comprise a tip calibrating system, marks for calibration, rails and frame, hardware controllers, HEPA filtration system (not shown in the figures) and led light strips 8 as germicidal UV lights on top.

The laboratory device of a preferred embodiment further comprises at least one heated microplate sealer 39, 40 that can produce from room temperature up to 99°C and keep the lid of labware heated at required temperatures. The microplate sealer 39, 40 is able to seal and remove the seals of labware.

The laboratory device of a preferred embodiment further comprises at least one temperature module 41, 42 that can have position for mounting tubes 100 µL - 50ml or microplates (6-384 well plates) or any other type of labware. The temperature module 41, 42 can heat labware (containing samples for example) up to 95°C, and cool them down to 4°C.

The laboratory device of a preferred embodiment further comprises at least one incubation module 37, 38 for heating and/or shaking that can have position for mounting tubes 100 µL - 50ml or microplates (6-384 well plates) or any other type of labware. The incubation module 37, 38 is capable of rotational movement in the range of 200-3000 rpm (rotations per minute) of the mounted labware and can also heat labware (containing samples for example) up to 99°C, and cool them down to -10°C without shaking.

The preferred embodiment of the laboratory automation device that is illustrated in Figs. 1a-1e and Figs. 2a-ef comprises two microplate sealers 39, 40, two temperature modules 41, 42 and two incubation modules 37, 38. These can also be within the liquid handling station(s) 9, 10.

The laboratory device of a preferred embodiment further comprises an automated thermocycler 43 and a magnetic module 44. The automated thermocycler 43 typically has a working volume range of 10-180 µL, can be able to open and close lids automatically and program lid temperatures up to 110°C and program block temperatures in the range of 4-99°C. The magnetic module 44 is able to engage and disengage strong magnets with labware, precipitate magnetic beads and can have adjustable plate brackets.

The laboratory device of a preferred embodiment further comprises a monitoring system comprising sensors and/or cameras 18, 59, 60 configured to monitor the movement of the labware transferring system. The monitoring system preferably comprises at least six cameras 55, 56, 57, 58, 59, 60. Preferably, at least one camera 59, 60 is mounted on each liquid handling station 9, 10. Preferably, at least one camera is mounted on each deck. In a preferred embodiment there are two cameras 55, 56 on the upper deck and two cameras 57, 58 on the lower deck.

The laboratory device of a preferred embodiment further comprises a controlling and scheduling system. The controlling and scheduling system may comprise a software that is separated into two independent parts which exchange information between them: The Main Task Controller (Robotic Operating System (ROS) Node) which controls each hardware in subsystems, and the user interface which receives input from user. The Main Task Controller functionality is to keep track of the automated method execution and to orchestrate all the subsystems' controllers for method execution and provide collision avoidance. The Main Task Controller has all the required functionality and tools to control a variety of different hardware in a versatile and easily managed way, making the interfacing with multiple hardware devices and provides a messaging subsystem that allows high throughput distributed event management, so each subsystem's controller handles only the events that affect it, independently. The Main Task Controller connects to all the subsystems via USB or serial interface or other connection, and it can connect to the network either via a Wireless WiFi connection or via Ethernet. The user interface consists of the frontend of web applications. In a preferred embodiment the web applications are the User management, the Control Panel, and the Experiment Protocol Designer. The User management application provides all required functionality for the management of the user preferences and information (method procedure, notes, method specification etc.). The Control Panel application provides all the required functionality for the control, calibration of system and method execution and monitoring. The Experiment Protocol Designer application provides a way to create, structure and simulate the method to be automatically executed. The user interface receives user inputs and once the "Execute" command is given, the information is sent to the Main Task Controller which then coordinates the execution of the requested method. The user interface provides all the necessary functionality to the user to create, edit, save under his/her profile, or share a method, to calibrate the system, or to start, stop and monitor the experiment execution. The user interface can be remotely operated by a user to control the device and/or monitor the laboratory procedures handled by the device and/or schedule procedures on the device and/or review the errors and/or watch the recorded laboratory procedures and to calibrate the device. The purpose of the calibration is to tune all the subsystems so they can operate faultlessly and with the required precision. The calibration procedure can be broken apart to the calibration procedures of each of the subsystems.

The laboratory device can also comprise electrical and electronic control systems, such as wiring 32, electrical boards 33, power suppliers 34, fuses 35 and a computer 36. These are preferably held on a separate shelf from the laboratory equipment, on the upper shelf 7 or on shelf 5 or in electrical boards 33.

The device may comprise a universal vacuum-manifold 49 for biotech column that holds columns with filters for isolation of biological material; the negative pressure causes liquid passage through column filters and the container of the universal vacuum-manifold 49 holds the flow through waste.

Most of the parts described above are depicted in Fig. 3a-3i which show different details of the device. Fig. 4 illustrates the device according to a preferred embodiment and some parts of the device enlarged, focusing on the moving parts. We have illustrated the direction of movement of the moving elements in the device. Circular movement is shown by circular arrows and linear movement is shown by bilateral arrows. The moving parts on the lower deck are: elevator 16, vacuum grippers 17, 18 and 26, automatic drawer unit 19, door and shelves of freezer 22 and fridge 24, loading unit 25 and lower-deck slider 30, linear actuator 31 (of the lower-deck slider 30), hatch of the centrifuge 21. The moving parts on the upper deck are: four-axis robotic arm 11, vacuum gripper 12 (of the robotic arm 11), upper-deck slider 14, elevator 16, vacuum gripper 17 (of the elevator 16).

In a possible embodiment, the linear actuators may comprise an elevator 16, an upper-deck slider 14, a linear actuator 31 and a drawer unit 19. The elevator 16 may have a camera 18 attached to it for calibrations and a vacuum gripper 17. The four-axis robotic arm 11 may also have a vacuum gripper 12. The device may comprise an air pump system comprising air pumps 51, 52 for controlling the vacuum grippers 12, 17, more particularly, for controlling the grippers' fingers movement on the four-axis robotic arm 11 and the elevator 16. The upper-deck slider 14 is capable of linear movements in the upper deck of the device and is able to load and unload labware from the four-axis robotic arm 11 and/or the elevator 16. The upper-deck slider 14 may also have a camera 15 attached to it for taking photos of tubes and microplates bottom site for user's reference.

The lower-deck slider 30 is able to load and unload labware from the loading unit 25 and/or the elevator 16. The lower-deck slider 30 which is capable of linear movements in the lower deck of the device may have a linear actuator 31 for throwing labware in bins.

There can also be an air pump 53 for emptying the waste collection units 27, 28 from any liquid handling stations 9, 10 and an air pump 54 for the gripper on the loading unit 25.

In a method for the application of the automated laboratory device according to our invention, the following steps are included.
1) Importing at least one labware containing a sample and at least one labware containing a reagent via the automatic drawer unit 19 into the device.
2) Identifying the labware containing the sample and the labware containing the reagent and selecting a corresponding laboratory process via the controlling and scheduling system. This identification step may happen with a barcode scanner 20 connected to the automatic drawer unit 19. However, the identification may also take place by the user entering a registration number in the device or in the user interface, or recognizing the labware with a camera or sensor.
3) Optionally, storing the labware containing the sample and/or the labware containing the reagent in the freezer 22 or the fridge 24 for later use. If this step is included, the loading unit 25 transfers the labware from the automatic drawer unit 19 to the freezer 22 or the fridge 24.
4) Transferring the labware containing the sample and the labware containing the reagent via the labware transferring system to the liquid handling station(s) 9, 10. Depending on where the labware comes from, it is automatically retrieved from the freezer 22 or the fridge 24, or is typically transferred from the automatic drawer unit 19 on the lower deck to the upper deck first via the lower-deck slider 30 and then the upper-deck slider 14 and with the use of the four-axis robotic arm 11.
5) Transferring reagent in a liquid volume of 1-5000 µL from the labware containing the reagent to at least one labware containing the sample.
6) And, treating the sample by mixing the reagent by pipetting or shaking with the sample in any volume between 1-1000 µL with the pipettes in the liquid handling station(s) 9, 10. With this method, any kind of laboratory process can be performed.

The device can use any brand or type or volume of laboratory tips, tubes, microplates, microscope slides, cover slips, laboratory columns and/or other labware for the laboratory procedures that the device performs. The device can use also custom labware. The device can handle liquids that are viscous or not viscous and/or contain diluted inorganic and/or organic chemicals and/or magnetic or chemical beads and/or biological material in the form of tissue or cells or molecules (such as any type of DNAs, RNAs, proteins, enzymes, whole extracts, etc.) in any concentration.

The method may further comprise any of the steps as follows.
- Transferring the labware containing the treated sample to the temperature module(s) 41, 42 and cooling the treated sample to a temperature below room temperature to as low as 4°C with the temperature module(s) 41, 42 or as low as -10°C with the incubation modules 37, 38 (room temperature means 25 °C).
- Transferring the labware containing the treated sample to the centrifuge 21 via the labware transferring system.
- Centrifuging the labware containing the treated sample for a period longer than 1 second for 100-15000 rpm with the centrifuge 21.
- Adding magnetic beads to the treated sample via the liquid handling station(s) 9, 10, transferring the labware containing the treated sample to the magnetic module 44 via the labware transferring system and purifying extracted biomolecules by activating the magnetic beads and then removing supernatant from the treated sample by liquid handling.
- Mixing the extracted biomolecules with Polymerase Chain Reaction (PCR) reagents.
- Transferring the labware containing the PCR mixture to the automated thermocycler 43.
- Exporting the labware containing the PCR mixture via the automatic drawer unit 19 to the user.
- Sterilization of the interior of the device through germicidal UV, more particularly of the air and surfaces inside the upper deck of the device and sterilizing air inside platform through HEPA filtration.

Some steps may be repeated multiple times. The steps executed can be monitored and recorded by the cameras 55, 56, 57, 58, 59, 60 within the device. For this purpose, photographs video and other electronic documentation of the process may take place in the form of error reporting, delays, timeline according to user requirements. The steps executed within the device can be repeated without human supervision for a time period of 24 hours or longer. This allows the user to walk away and stay away for 24 hours or longer or even for days. The user is informed via the user interface by the controlling and scheduling system when the laboratory process is completed and is informed of any errors that occurred during the process.

The method may further comprise the step of incubating the treated sample to a predetermined temperature and/or shaking the treated sample for up to 3000 rpm for more than 1 second with the incubation module(s) 37, 38. The laboratory process can be paused automatically or by the user after any step for a period longer than 1 second for the heating and/or shaking or cooling of the sample with the incubation module(s) 37, 38 and temperature modules 41, 42 or for magnetic bead precipitation via magnetic module 44 or PCR reaction on thermal cycler (43).

During the method, collisions are avoided - typically due to the monitoring system and the controlling and scheduling system - between:
- Moving parts or cargo/load (labware) of the four-axis robotic arm 11 with any static or moving parts of the liquid handling station(s) 9, 10 or their cargo/load (labware);
- Moving parts or cargo/load (labware) of the four-axis robotic arm 11 with any of the temperature module 41, 42, magnetic module 44 or incubation module(s) 37, 38 and/or the automatic thermocycler(s) 43 inside the liquid handling station(s) 9, 10 static and moving parts;
- Moving parts or cargo/load (labware) of the four-axis robotic arm 11 with the static or moving parts or cargo/load (labware) of the elevator 16;
- Moving parts or cargo/load (labware) of the four-axis robotic arm 11 with the static or moving parts or its cargo/load (labware) of the upper-deck slider 14;
- Moving parts or cargo/load (labware) of the four-axis robotic arm 11 with the frame 2 or the covering panels 1 of the device;
- Moving parts or cargo/load (labware) of the liquid handling station(s) 9, 10 with any of the temperature module 41, 42, magnetic module 44 or incubation module(s) 37, 38 and/or the automatic thermocycler(s) 43;
- Moving parts or cargo/load (labware) of the elevator 16 with upper-deck-slider 14 and/or lower-deck-slider 30 and/or with the four-axis robotic arm 11 and/or with centrifuge hatch, lid, rotor or buckets;
- Moving parts or cargo/load (labware) of the upper-deck-slider 14 with the elevator 16 and/or with the four-axis robotic arm 11;
- Moving parts or cargo/load (labware) of the lower-deck-slider 30 with the elevator 16 and/or with loading unit 25 and/or with automatic drawer unit 19;
- Moving parts or cargo/load (labware) of the loading unit 25 with centrifuge 21 and/or automatic drawer unit 19 and/or lower-deck-slider 30 and/or fridge 24 and/or freezer 22.

The used labware and reagents are preferably transferred to the waste collection unit(s) 27, 28 via the linear actuators 14, 16, 19, 25, 30, 31. Organic solvents can be transferred to trash bin 29 in a similar way.

If a life-science laboratory process requires the use of the centrifuge 21, then the system will replicate the loading of the sample plate into an empty plate that will act as a counter weight. The counter weight plate can be prepared by using water instead of samples or reagents.

User can input remotely (without physical presence) all the required data via the user Interface and once the "Execute" command is given, backend sends the protocol to the Main Task Controller Node which then coordinates the execution of the laboratory protocol by the device. In the preferred embodiment where there are multiple liquid handling stations, multiple users may use the device even at the same time, for the same or different procedures.

The invention has multiple advantages. It provides stay-away automation, meaning that the user can not only walk away but also stay away for up to 24 hours or even longer during the use of the device. Thus, the device can increase productivity of the average user by increasing laboratory executing hours up to 300% (24 hours non-stop execution of laboratory work). The device increases consistency with robotic accuracy, maximizes efficiency by performing overlapping experiments, generates results in resource shortage cases, saves time for researchers which they can utilize in other important research tasks, offers extensive documentation with photos and video for monitoring and troubleshooting and eliminates waste of samples and reagents. The waste of samples and reagents is eliminated by more than 50% according to our estimate. Due to less expensive liquid handling stations and robotic arm, the price of the device can be significantly lower. Another advantage is that it allows the use of any kind of reagents (depending on the choice of the user), and the reagents can be stored in the device and retrieved on demand. A further advantage is that the device is user-friendly, compact and autonomous, which achieve unrivalled levels of versatility by fully or semi-automating multiple procedures. Major advantage, beyond the current state of the art, is the ability of this device to be programmed by the user to perform endless variations and new laboratory procedures. Major advantage of the device is also its ability to holistically perform all steps of most laboratory procedures (full-automation, not semi-automation).

Under the word labware, we refer to any kind of labware such as microplates (6-384 well plates) or laboratory tubes (100 µL -50ml) or laboratory flasks or other glassware or plasticware vessels or microscope slides or cover slips or columns or custom-made laboratory consumables or custom-made components. It can be empty labware or a labware containing sample(s) or reagent(s).

Other variations than those described above can be understood and effected by a person skilled in the art. In the claims, the word "comprising" does not exclude other elements or steps, and the indefinite article "a" or "an" does not exclude a plurality. A single processor or other unit may fulfill the functions of several items recited in the claims. The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", simply refer to the orientation of the illustrated structure as the particular drawing figure faces the reader.

## Claims

1. Laboratory automation device comprising:
- a housing having a frame (2) and at least three shelves (3, 4, 5, 7),
- a centrifuge (21) with at least two labware holding positions,
- the shelves (3, 4, 5, 7) holding a labware transferring system, the labware transferring system comprising a four-axis robotic arm (11) and linear actuators (14, 16, 19, 25, 30, 31) configured to move and transfer labware within the device, the linear actuators comprising a loading unit (25) and an automatic drawer unit (19) for exporting and importing the labware;
- a freezer (22) and a fridge (24) configured to be loaded and unloaded by the loading unit (25),
- at least one three-axis liquid handling station (9, 10), the liquid handling station (9, 10) comprising at least two pipettes, at least nine positions for labware, at least one waste collection unit (27, 28), at least one tip box and at least one tip feeder (45, 46, 47, 48) configured to automatically refill said tip box;
the laboratory device further comprising:
- a microplate sealer (39, 40),
- a temperature module (41, 42),
- an incubation module (37, 38),
- a magnetic module (44),
- an automated thermocycler (43),
- a monitoring system comprising sensors and/or cameras (18, 59, 60) configured to monitor the movement of the labware transferring system; and
- a controlling and scheduling system having a user interface designed to be remotely operated by a user to control the device and/or schedule procedures on the device,
the controlling and scheduling system being connected to the monitoring system,
wherein the centrifuge (21), the freezer (22), the fridge (24), the liquid handling stations (9, 10), the microplate sealer (39, 40), the incubation module (37, 38), the magnetic module (44), and the automated thermocycler (43) are connected via the labware transferring system, **characterized in that** the device comprises an ice producing unit (23), the ice producing unit (23) comprising an automated ice-bucket (50).

2. The device according to claim 1, wherein the linear actuators comprise an elevator (16), an upper-deck slider (14) and a lower-deck slider (30),
the elevator (16) having a vacuum gripper (17); the robotic arm (11) also having a vacuum gripper (12); the device comprising an air pump system comprising air pumps (51, 52) for controlling said vacuum grippers (12, 17);
the upper-deck slider (14) and the lower-deck slider (30) being two-axis linear actuators,
the upper-deck slider (14) being configured to load and unload labware from the robotic arm (11) and/or the elevator (16), the upper-deck slider (14) having a camera (15) attached to it; the lower-deck slider (30) being configured to load and unload labware from the loading unit (25) and/or the elevator (16).

3. The device according to any of the preceding claims, wherein the monitoring system comprises at least six cameras (55, 56, 57, 58, 59, 60); at least one camera (59, 60) being mounted on the liquid handling station (9, 10).

4. The device according to any of the preceding claims, wherein the freezer (22) and the fridge (24) both enclose multiple shelves and an additional positioning unit; the positioning unit being configured to place labware at a predetermined position inside the freezer (22) and the fridge (24) and/or to move said shelves inside the freezer (22) and the fridge (24).

5. The device according to claim 4, wherein the positioning unit is configured to move said shelves inside the freezer (22) and the fridge (24) in a carousel-like movement.

6. The device according to any of the preceding claims, wherein the device comprises a barcode scanner (20) connected to the automatic drawer unit (19) for reading barcodes on labware.

7. The device according to any of the preceding claims, wherein the device comprises at least three shelves (3, 4, 7) arranged above each other in the device; and
the freezer (22), the fridge (24), the liquid handling station (9, 10), the microplate sealer (39, 40), the incubation module (37, 38), the temperature module (41, 42), the magnetic module (44), and the automated thermocycler (43) are mounted at predetermined positions on the shelves (3, 4, 7); and the centrifuge (21) has a metallic base (6).

8. The device according to any of the preceding claims, wherein the volume of the device is less than 3.5 m³, preferably less than 3 m³.

9. Method for the application of an automated laboratory device according to claim 1 for performing a laboratory process, wherein the method comprises the steps:
- importing at least one labware containing a sample and at least one labware containing a reagent via the automatic drawer unit (19) into the device;
- identifying the labware containing the sample and the labware containing the reagent and selecting a corresponding laboratory process via the controlling and scheduling system;
- optionally, storing the labware containing the sample and/or the labware containing the reagent in the freezer (22) or the fridge (24) for later use;
- transferring the labware containing the sample and the labware containing the reagent via the labware transferring system to the liquid handling station (9, 10);
- transferring reagent in a liquid volume of 1-5000 µL from the labware containing the reagent to at least one labware containing the sample, and
- treating the sample by mixing the reagent with the sample in any volume between 1-1000 µL with the pipettes in the liquid handling station (9, 10).

10. The method according to claim 9, wherein the labware containing the sample is identified with a barcode scanner (20) connected to the automatic drawer unit (19).

11. The method according to claim 9 or 10, wherein the method further comprises the step of incubating the treated sample to a predetermined temperature and/or shaking the treated sample for up to 3000 rpm for more than 1 second with the incubation module (37, 38),
and wherein the laboratory process is paused after any step for a period longer than 1 second for said heating or shaking of the sample with the incubation module (37, 38).

12. The method according to any of claims 9 to 11, wherein the method further comprises the steps:
- transferring the labware containing the treated sample to the temperature module (41, 42) and cooling the treated sample to a temperature below room temperature to about 4°C with the temperature module (41, 42);
- transferring the labware containing the treated sample to the centrifuge (21) via the labware transferring system;
- centrifuging the labware containing the treated sample for a period longer than 1 second for 100-15000 rpm with the centrifuge (21);
- adding magnetic beads to the treated sample via the liquid handling station (9, 10), transferring the labware containing the treated sample to the magnetic module (44) via the labware transferring system and purifying extracted biomolecules by activating the magnetic beads and then removing supernatant from the treated sample by liquid handling;
- mixing the extracted biomolecules with Polymerase Chain Reaction (PCR) reagents;
- transferring the labware containing the PCR mixture to the automated thermocycler (43); and
- exporting the labware containing the PCR mixture via the automatic drawer unit (19) to the user.

13. The method according to any of claims 9 to 12, wherein the used labware and reagents are transferred to the waste collection unit (27, 28) via the linear actuators (14, 16, 19, 25, 30, 31).

14. The method according to any of claims 9 to 13, wherein the steps are monitored and recorded by the cameras (55, 56, 57, 58, 59, 60) within the device.

15. The method according to any of claims 9 to 14, wherein the steps described in any of claims 8 to 13 are executed without human supervision for a time period of 24 hours or longer; and the user is informed via the user interface by when the laboratory process is completed.

## Patentansprüche

1. Laborautomatisierungsvorrichtung, umfassend:
- ein Gehäuse mit einem Rahmen (2) und mindestens drei Regalen (3, 4, 5, 7),
- eine Zentrifuge (21) mit mindestens zwei Laborgut-Halterungen,
- die Regale (3, 4, 5, 7), die ein Laborgut-Transfersystem halten, wobei das Laborgut-Transfersystem einen Vierachsroboterarm (11) und Linearaktoren (14, 16, 19, 25, 30, 31) umfasst, die konfiguriert sind,
um Laborgut innerhalb der Vorrichtung zu bewegen und zu transferieren, wobei die Linearaktoren eine Ladeeinheit
(25) und eine automatische Schubladeneinheit (19) zum Exportieren und Importieren des Laborguts umfasst;
- einen Gefrierschrank (22) und einen Kühlschrank (24), die konfiguriert sind, um von der Ladeeinheit (25) be- und entladen zu werden,
- mindestens eine Dreiachsen-Flüssigkeitshandhabungsstation (9, 10), die Flüssigkeitshandhabungsstation (9, 10)
mindestens zwei Pipetten, mindestens neun Positionen für Laborgut, mindestens eine Abfallsammeleinheit (27, 28), mindestens eine Spitzenbox und mindestens einen Spitzenzuführer (45, 46, 47, 48),
der konfiguriert ist, um die Spitzenbox automatisch nachzufüllen, umfasst;
wobei die Laborvorrichtung ferner umfasst:
- einen Mikroplattenverschließer (39, 40),
- ein Temperaturmodul (41, 42),
- ein Inkubationsmodul (37, 38),
- ein Magnetmodul (44),
- einen automatisierten Thermocycler (43),
- ein Überwachungssystem mit Sensoren und/oder Kameras (18, 59, 60), das konfiguriert ist,
um die Bewegung des Laborgut-Transfersystems zu überwachen; und
- ein Steuerungs- und Planungssystem mit einer Benutzerschnittstelle, die so konzipiert ist, dass sie von einem Benutzer ferngesteuert werden kann, um die Vorrichtung zu steuern und/oder Verfahren auf der Vorrichtung zu planen,
wobei das Steuerungs- und Planungssystem mit dem Überwachungssystem verbunden ist,
wobei die Zentrifuge (21), der Gefrierschrank (22), der Kühlschrank (24), die Flüssigkeitshandhabungsstationen (9, 10),
der Mikroplattenverschließer (39, 40), das Inkubationsmodul (37, 38), das Magnetmodul (44) und der automatisierte Thermocycler (43) über das Laborgut-Transfersystem verbunden sind,
**dadurch gekennzeichnet, dass** die Vorrichtung eine Eisherstellungseinheit (23) umfasst, wobei die Eisherstellungseinheit (23) einen automatisierten Eiseimer (50) umfasst.

2. Vorrichtung nach Anspruch 1, wobei die Linearaktoren einen Aufzug (16), einen Oberdeck-Schieber (14) und einen Unterdeck-Schieber (30) umfassen,
wobei der Aufzug (16) einen Vakuumgreifer (17) aufweist; wobei der Roboterarm (11) ebenfalls einen
Vakuumgreifer (12) aufweist; wobei die Vorrichtung ein Luftpumpensystem mit Luftpumpen (51, 52) zur Steuerung der Vakuumgreifer (12, 17) umfasst;
wobei der Oberdeck-Schieber (14) und der Unterdeck-Schieber (30) Zweiachsen-Linearaktoren sind, wobei der Oberdeck-Schieber (14) konfiguriert ist, um Laborgut vom
Roboterarm (11) und/oder dem Aufzug (16) zu be- und entladen, wobei der Oberdeck-Schieber (14) eine daran befestigte Kamera (15) aufweist;
wobei der Unterdeck-Schieber (30) konfiguriert ist, um Laborgut von der
Ladeeinheit (25) und/oder dem Aufzug (16) zu be- und entladen.

3. Vorrichtung nach einem der vorhergehenden Patentansprüche, wobei das Überwachungssystem mindestens sechs Kameras (55, 56, 57, 58, 59, 60) umfasst; wobei mindestens eine Kamera (59, 60) an der Flüssigkeitshandhabungsstation (9, 10) montiert ist.

4. Vorrichtung nach einem der vorhergehenden Patentansprüche, wobei der Gefrierschrank (22) und der Kühlschrank (24) beide mehrere Regale und eine zusätzliche Positioniereinheit umschließen; wobei die Positioniereinheit konfiguriert ist, um Laborgut an einer vorbestimmten Position im Gefrierschrank (22)
und im Kühlschrank (24) zu platzieren und/oder die Regale im Gefrierschrank (22) und im Kühlschrank (24) zu bewegen.

5. Vorrichtung nach Anspruch 4, wobei die Positioniereinheit konfiguriert ist, um die Regale im Gefrierschrank (22) und im Kühlschrank (24) in einer karussellartigen Bewegung zu bewegen.

6. Vorrichtung nach einem der vorhergehenden Patentansprüche, wobei die Vorrichtung einen Barcodescanner (20) umfasst, der mit der automatischen Schubladeneinheit (19) zum Lesen von Barcodes auf Laborgut verbunden ist.

7. Vorrichtung nach einem der vorhergehenden Patentansprüche, wobei die Vorrichtung mindestens drei Regale (3, 4, 7) umfasst, die übereinander in der Vorrichtung angeordnet sind; und
der Gefrierschrank (22), der Kühlschrank (24), die Flüssigkeitshandhabungsstation (9, 10), der Mikroplattenverschließer (39,
40), das Inkubationsmodul (37, 38), das Temperaturmodul (41, 42), das Magnetmodul (44) und der automatisierte Thermocycler (43) an vorbestimmten Positionen auf den Regalen (3, 4, 7) montiert sind; und die Zentrifuge (21) eine metallische Basis (6) aufweist.

8. Vorrichtung nach einem der vorhergehenden Patentansprüche, wobei das Volumen der Vorrichtung weniger
als 3,5 m3, vorzugsweise weniger als 3 m3 beträgt.

9. Verfahren zur Anwendung einer automatisierten Laborvorrichtung nach Anspruch 1
zur Durchführung eines Laborprozesses, wobei das Verfahren die folgenden Schritte umfasst:
- Importieren von mindestens einem Laborgut, das eine Probe enthält, und mindestens einem Laborgut,
das ein Reagenz enthält, über die automatische Schubladeneinheit (19) in die Vorrichtung;
- Identifizieren des Laborguts, das die Probe enthält, und des Laborguts, welches das Reagenz enthält,
und Auswählen eines entsprechenden Laborprozesses über das Steuerungs- und Planungssystem;
- optional Lagern des Laborguts, das die Probe enthält, und/oder des Laborguts, welches das Reagenz enthält,
im Gefrierschrank (22) oder im Kühlschrank (24) zur späteren Verwendung;
- Transferieren des Laborguts, das die Probe enthält, und des Laborguts, welches das Reagenz enthält,
über das Laborgut-Transfersystem zur Flüssigkeitshandhabungsstation (9, 10);
- Transferieren von Reagenz in einem Flüssigkeitsvolumen von 1-5000 µL aus dem Laborgut, welches das Reagenz enthält, in mindestens ein Laborgut, das die Probe enthält, und
- Behandeln der Probe durch Mischen des Reagenzes mit der Probe in einem beliebigen Volumen zwischen 1-1000 µL
mit den Pipetten in der Flüssigkeitshandhabungsstation (9, 10).

10. Verfahren nach Anspruch 9, wobei das Laborgut, das die Probe enthält, mit einem Barcodescanner (20) identifiziert wird, der mit der automatischen Schubladeneinheit (19) verbunden ist.

11. Verfahren nach Anspruch 9 oder 10, wobei das Verfahren ferner den Schritt umfasst
Inkubieren der behandelten Probe auf eine vorbestimmte Temperatur und/oder Schütteln der behandelten Probe
mit bis zu 3000 U/min für mehr als 1 Sekunde mit dem Inkubationsmodul (37, 38),
und wobei der Laborprozess nach jedem Schritt für einen Zeitraum von mehr als 1 Sekunde für das Erhitzen oder Schütteln der Probe mit dem Inkubationsmodul (37, 38) unterbrochen wird.

12. Verfahren nach einem der Patentansprüche 9 bis 11, wobei das Verfahren ferner die folgenden Schritte umfasst:
- Transferieren des Laborguts, das die behandelte Probe enthält, zum Temperaturmodul (41, 42) und Kühlen der behandelten Probe auf eine Temperatur unter Raumtemperatur bis etwa 4 °C mit dem Temperaturmodul (41, 42);
- Transferieren des Laborguts, das die behandelte Probe enthält, zur Zentrifuge (21) über das Laborgut-Transfersystem;
- Zentrifugieren des Laborguts, das die behandelte Probe enthält, für einen Zeitraum von mehr als 1 Sekunde bei
100-15000 U/min mit der Zentrifuge (21);
- Zugeben von magnetischen Kügelchen zu der behandelten Probe über die Flüssigkeitshandhabungsstation (9, 10), Transferieren
des Laborguts, das die behandelte Probe enthält, zum Magnetmodul (44)
über das Laborgut-Transfersystem und Reinigen extrahierter Biomoleküle durch Aktivieren der magnetischen Kügelchen und
anschließendes Entfernen des Überstands aus der behandelten Probe durch Flüssigkeitshandhabung;
- Mischen der extrahierten Biomoleküle mit Polymerase-Kettenreaktions (PCR)-Reagenzien;
- Transferieren des Laborguts, das die PCR-Mischung enthält, zum automatisierten Thermocycler (43); und
- Exportieren des Laborguts, das die PCR-Mischung enthält, über die automatische Schubladeneinheit (19)
an den Benutzer.

13. Verfahren nach einem der Patentansprüche 9 bis 12, wobei das verwendete Laborgut und die Reagenzien über die Linearaktoren (14, 16, 19, 25, 30, 31) zur Abfallsammeleinheit (27, 28) transferiert werden.

14. Verfahren nach einem der Patentansprüche 9 bis 13, wobei die Schritte von den Kameras (55, 56, 57, 58, 59, 60) innerhalb der Vorrichtung überwacht und aufgezeichnet werden.

15. Verfahren nach einem der Patentansprüche 9 bis 14, wobei die in einem der
Patentansprüche 8 bis 13 beschriebenen Schritte ohne menschliche Überwachung für einen Zeitraum von 24 Stunden oder länger ausgeführt werden;
und der Benutzer über die Benutzerschnittstelle darüber informiert wird, wann der Laborprozess abgeschlossen ist.

## Revendications

1. Dispositif d'automatisation de laboratoire comprenant :
- un boîtier ayant un châssis (2) et au moins trois étagères (3, 4, 5, 7),
- une centrifugeuse (21) avec au moins deux positions de maintien de matériel de laboratoire,
- les étagères (3, 4, 5, 7) supportant un système de transfert de matériel de laboratoire, le système de transfert de matériel de laboratoire comprenant
un bras robotisé à quatre axes (11) et des actionneurs linéaires (14, 16, 19, 25, 30, 31) configurés pour déplacer et transférer le matériel de laboratoire à l'intérieur du dispositif,
les actionneurs linéaires comprenant une unité de chargement
(25) et une unité de tiroir automatique (19) pour exporter et importer le matériel de laboratoire ;
- un congélateur (22) et un réfrigérateur (24) configurés pour être chargés et déchargés par l'unité de chargement (25),
- au moins une station de manipulation de liquides à trois axes (9, 10), la station de manipulation de liquides (9, 10)
comprenant au moins deux pipettes, au moins neuf positions pour le matériel de laboratoire,
au moins une unité de collecte de déchets (27, 28), au moins une boîte à embouts et au moins un chargeur d'embouts (45, 46, 47, 48)
configuré pour recharger automatiquement ladite boîte à embouts ;
le dispositif de laboratoire comprenant en outre :
- une thermoscelleuse de microplaques (39, 40),
- un module de température (41, 42),
- un module d'incubation (37, 38),
- un module magnétique (44),
- un thermocycleur automatisé (43),
- un système de surveillance comprenant des capteurs et/ou des caméras (18, 59, 60) configurés pour surveiller
le mouvement du système de transfert de matériel de laboratoire ; et
- un système de contrôle et de planification ayant une interface utilisateur conçue pour être commandée
à distance par un utilisateur pour contrôler le dispositif et/ou planifier des procédures sur le dispositif,
le système de contrôle et de planification étant connecté au système de surveillance,
**caractérisé en ce que** la centrifugeuse (21), le congélateur (22), le réfrigérateur (24), les stations de manipulation de liquides (9, 10),
la thermoscelleuse de microplaques (39, 40), le module d'incubation (37, 38), le module magnétique (44)
et le thermocycleur automatisé (43) sont connectés via le système de transfert de matériel de laboratoire,
dans lequel volt
le dispositif comprend une unité de production de glace (23), l'unité de production de glace (23) comprenant un seau à glace automatisé (50).

2. Dispositif selon la revendication 1, **caractérisé en ce que** les actionneurs linéaires comprennent un élévateur (16),
un coulisseau de pont supérieur (14) et un coulisseau de pont inférieur (30),
l'élévateur (16) ayant une pince à vide (17) ; le bras robotisé (11) ayant également une pince à vide (12) ; le dispositif comprenant un système de pompe à air comprenant des pompes à air (51, 52) pour contrôler lesdites pinces à vide (12, 17) ;
le coulisseau de pont supérieur (14) et le coulisseau de pont inférieur (30) étant des actionneurs linéaires à deux axes,
le coulisseau de pont supérieur (14) étant configuré pour charger et décharger le matériel de laboratoire du bras robotisé
(11) et/ou de l'élévateur (16), le coulisseau de pont supérieur (14) ayant une caméra (15) qui y est fixée ;
le coulisseau de pont inférieur (30) étant configuré pour charger et décharger le matériel de laboratoire
de l'unité de chargement (25) et/ou de l'élévateur (16).

3. Dispositif selon l'une quelconque des revendications précédentes, **caractérisé en ce que** le système de surveillance
comprend au moins six caméras (55, 56, 57, 58, 59, 60) ; au moins une caméra (59, 60)
étant montée sur la station de manipulation de liquides (9, 10).

4. Dispositif selon l'une quelconque des revendications précédentes, **caractérisé en ce que** le congélateur (22) et le réfrigérateur
(24) renferment tous deux de multiples étagères et une unité de positionnement supplémentaire ; l'unité de positionnement étant configurée
pour placer le matériel de laboratoire à une position prédéterminée à l'intérieur du congélateur (22) et du réfrigérateur
(24) et/ou pour déplacer lesdites étagères à l'intérieur du congélateur (22) et du réfrigérateur (24).

5. Dispositif selon la revendication 4, **caractérisé en ce que** l'unité de positionnement est configurée pour déplacer lesdites étagères à l'intérieur du congélateur (22) et du réfrigérateur (24) dans un mouvement de type carrousel.

6. Dispositif selon l'une quelconque des revendications précédentes, **caractérisé en ce que** le dispositif comprend un lecteur de
codes-barres (20) connecté à l'unité de tiroir automatique (19) pour lire les codes-barres sur le matériel de laboratoire.

7. Dispositif selon l'une quelconque des revendications précédentes, **caractérisé en ce que** le
dispositif comprend au moins trois étagères (3, 4, 7) disposées les unes au-dessus des autres dans le dispositif ; et
le congélateur (22), le réfrigérateur (24), la station de manipulation de liquides (9, 10), la thermoscelleuse de microplaques (39,
40), le module d'incubation (37, 38), le module de température (41, 42), le module magnétique (44) et le thermocycleur automatisé (43) sont montés à des positions prédéterminées sur les étagères (3, 4, 7) ; et la centrifugeuse (21) possède une base métallique (6).

8. Dispositif selon l'une quelconque des revendications précédentes, **caractérisé en ce que** le volume du dispositif
est inférieur à 3,5 m3, de préférence inférieur à 3 m3.

9. Procédé d'application d'un dispositif de laboratoire automatisé selon la revendication 1
pour effectuer un processus de laboratoire, **caractérisé en ce que** le procédé comprend les étapes consistant à :
- importer au moins un récipient de laboratoire contenant un échantillon et au moins un récipient de laboratoire contenant un réactif via l'unité de tiroir automatique (19) dans le dispositif ;
- identifier le matériel de laboratoire contenant l'échantillon et le matériel de laboratoire contenant le réactif et sélectionner un processus de laboratoire correspondant via le système de contrôle et de planification ;
- éventuellement, stocker le matériel de laboratoire contenant l'échantillon et/ou le matériel de laboratoire
contenant le réactif dans le congélateur (22) ou le réfrigérateur (24) pour une utilisation ultérieure ;
- transférer le matériel de laboratoire contenant l'échantillon et le matériel de laboratoire contenant le réactif
via le système de transfert de matériel de laboratoire vers la station de manipulation de liquides (9, 10) ;
- transférer le réactif dans un volume liquide de 1 à 5000 µL à partir du récipient de laboratoire contenant le réactif vers au moins un récipient de laboratoire contenant l'échantillon, et
- traiter l'échantillon en mélangeant le réactif avec l'échantillon dans n'importe quel volume compris entre 1 et 1000 µL
avec les pipettes dans la station de manipulation de liquides (9, 10).

10. Procédé selon la revendication 9, **caractérisé en ce que** le récipient de laboratoire contenant l'échantillon est identifié
avec un lecteur de codes-barres (20) connecté à l'unité de tiroir automatique (19).

11. Procédé selon la revendication 9 ou 10, **caractérisé en ce que** le procédé comprend en outre l'étape consistant
à incuber l'échantillon traité à une température prédéterminée et/ou à agiter l'échantillon traité jusqu'à 3 000 tr/min pendant plus d'une seconde avec le module d'incubation (37, 38),
et **caractérisé en ce que** le processus de laboratoire est mis en pause après n'importe quelle étape pendant une période supérieure à 1 seconde
pour ledit chauffage ou agitation de l'échantillon avec le module d'incubation (37, 38).

12. Procédé selon l'une quelconque des revendications 9 à 11, **caractérisé en ce que** le procédé comprend en outre
les étapes consistant à :
- transférer le matériel de laboratoire contenant l'échantillon traité vers le module de température (41, 42) et
refroidir l'échantillon traité à une température inférieure à la température ambiante jusqu'à environ 4° C avec
le module de température (41, 42) ;
- transférer le matériel de laboratoire contenant l'échantillon traité vers la centrifugeuse (21) via le système de
transfert de matériel de laboratoire ;
- centrifuger le matériel de laboratoire contenant l'échantillon traité pendant une période supérieure à 1 seconde à
100-15 000 tr/min avec la centrifugeuse (21) ;
- ajouter des billes magnétiques à l'échantillon traité via la station de manipulation de liquides (9, 10),
transférer le matériel de laboratoire contenant l'échantillon traité vers le module magnétique (44) via le système de transfert
de matériel de laboratoire et purifier les biomolécules extraites en activant les billes magnétiques puis
en retirant le surnageant de l'échantillon traité par manipulation de liquides ;
- mélanger les biomolécules extraites avec des réactifs de réaction en chaîne par polymérase (PCR, Polymerase Chain Reaction) ;
- transférer le matériel de laboratoire contenant le mélange de PCR vers le thermocycleur automatisé (43) ; et
- exporter le matériel de laboratoire contenant le mélange de PCR via l'unité de tiroir automatique (19)
vers l'utilisateur.

13. Le procédé selon une quelconque des revendications 9 à 12, **caractérisé en ce que** le matériel de laboratoire et les réactifs usagés sont transférés vers l'unité
de collecte de déchets (27, 28) via les actionneurs linéaires (14, 16, 19, 25, 30, 31).

14. Le procédé selon une quelconque des revendications 9 à 13, **caractérisé en ce que** les étapes sont surveillées et enregistrées
par les caméras (55, 56, 57, 58, 59, 60) à l'intérieur du dispositif.

15. Procédé selon une quelconque des revendications 9 à 14, **caractérisé en ce que** les étapes décrites dans une des quelconques
revendications 8 à 13 sont exécutées sans supervision humaine pendant une période de 24 heures ou plus ;
et l'utilisateur est informé via l'interface utilisateur du moment où le processus de laboratoire est terminé.
